# EUROPÄISCHE PATENTSCHRIFT

(11) **EP 0 978 397 B1**
(45) Veröffentlichungstag und Bekanntmachung des Hinweises auf die Patenterteilung: **17.10.2001**
(21) Anmeldenummer: 99113371.1
(22) Anmeldetag: 10.07.1999
(51) Int. Cl.: B60G 17/052, B60G 17/015

(54) **Niveauregeleinrichtung für Fahrzeuge mit Luftfedern**
Height control device for vehicles with air springs
Dispositif de réglage du niveau pour véhicules à ressorts pneumatiques

(30) Priorität: 06.08.1998 DE 19835491
(43) Veröffentlichungstag der Anmeldung: 09.02.2000
(73) Patentinhaber: Continental Aktiengesellschaft, 30165 Hannover (DE)
(72) Erfinder: Behmenburg, Christof, Dr., 31867 Lauenau (DE); Westerkamp, Helge, 30171 Hannover (DE)

(56) Entgegenhaltungen:
- EP-A- 0 496 958
- WO-A-93/05972
- DE-A- 3 028 472
- DE-A- 19 528 852
- US-A- 4 809 957

## Beschreibung

Die Erfindung betrifft eine Niveauregeleinrichtung für Fahrzeuge mit Luftfedern, durch die ein Fahrzeugaufbau gegenüber mindestens einer Fahrzeugachse abgefedert ist, die folgende Merkmale aufweist:
- eine Druckluftquelle, die zum Auffüllen der Luftfeder über einen Lufttrockner mit der Luftfeder verbindbar ist
- der Lufttrockner ist zum Auffüllen der Luftfeder einerseits über ein zur Luftfeder öffnendes Rückschlagventil mit der Luftfeder verbunden
- jede Luftfeder ist zum Entleeren über den Lufttrockner und über ein pneumatisch steuerbares erstes Wegeventil mit der Atmosphäre verbindbar, wobei der pneumatische Steuereingang dieses Wegeventils dann über ein zweites Wegeventil mit dem Druck in der Luftfeder gegen eine auf dem pneumatischen Steuereingang wirkende Rückstellkraft beaufschlagt ist,
- der pneumatische Steuereingang des pneumatisch steuerbaren ersten Wegeventils ist zum Beendigen eines Entleerungsvorganges mit der Atmosphäre verbindbar.

Eine Niveauregeleinrichtung der eingangs genannten Art ist aus der DE 35 42 975 C2 bekannt. Die aus dieser Druckschrift bekannte Niveauregeleinrichtung ist insofern als vorteilhaft zu bezeichnen, als daß das Wegeventil, über das die Luft zum Entleeren der Luftfeder über den Lufttrockner in die Atmosphäre entweicht, als pneumatisch steuerbares Wegeventil ausgebildet ist. Infolgedessen können an diesem Wegeventil mit Hilfe des Luftdrucks in der Luftfeder hohe Schaltkräfte erzeugt und große Strömungsquerschnitte geschaltet werden. Kommt es infolge von Luftfeuchtigkeit bei niedrigen Temperaturen also zu einer Vereisung des Wegeventils, so ist eine Schaltung des Wegeventils dennoch möglich. Bei der aus der DE 35 42 975 C2 bekannten Niveauregeleinrichtung ist es ferner als vorteilhaft anzusehen, daß in ihrem Grundzustand (d. h., wenn die Luftfedern weder aufgefüllt noch entleert werden) die Luftfedern einerseits durch ein zu den Luftfedern hin öffnendes Rückschlagventil und andererseits durch ein elektrisch steuerbares Wegeventil vom Lufttrockner getrennt sind, und dann keine Luft von den Luftfedern zu dem Lufttrockner strömen kann. Infolgedessen ist es möglich, zwischen den Luftfedern und dem Lufttrockner einen Drucksensor anzuordnen, mit dem jede Luftfeder zur Druckmessung verbunden werden kann, ohne daß dabei Luft aus der Luftfeder in den Lufttrockner strömt, was zu einem unerwünschten Druckverlust in der Luftfeder führen würde.

Es ist jedoch festzustellen, daß bei der aus der DE 35 42 975 C2 bekannten Niveauregeleinrichtung beim Entleeren einer Luftfeder die Luft über das elektrisch steuerbare Wegeventil geführt wird, das im Grundzustand die Luftfeder vom Lufttrockner trennt. Da mit elektrisch steuerbaren Wegeventilen nur kleine Strömungsquerschnitte mit vertretbarem Aufwand geschaltet werden können, ist daher ein schnelles Entlüften der Luftfedern und damit einhergehend eine gewünschte schnelle Absenkung des Fahrzeuges (z. B. im Stillstand des Fahrzeugs) nicht möglich.

Der Erfindung liegt die Aufgabe zugrunde, eine Niveauregeleinrichtung zu schaffen, in der im Grundzustand die Luftfedern von dem Lufttrockner vollständig getrennt sind und in der ein schnelles Entlüften der Luftfedern möglich ist.

Gemäß dem kennzeichnenden Merkmal des Anspruchs 1 wird die Aufgabe dadurch gelöst, daß der Lufttrockner zum Entleeren der Luftfeder andererseits über ein pneumatisch steuerbares drittes Wegeventil mit der Luftfeder verbunden ist, wobei der pneumatische Steuereingang dieses Wegeventils dann mit dem Druck in der Luftfeder gegen eine auf den pneumatischen Steuereingang wirkende Rückstellkraft beaufschlagt ist.

Die mit der Erfindung erzielten Vorteile sind insbesondere darin zu sehen, daß die Luftfedern über ein zwischen den Luftfedern und dem Lufttrockner angeordnetes pneumatisch steuerbares Wegeventil entlüftet werden, an dem große Strömungsquerschnitte schaltbar sind. Aufgrund dessen ist eine schnelle Entleerung der Luftfedern möglich. Darüber hinaus sind im Grundzustand der Niveauregeleinrichtung die Luftfedern vollständig vom Lufttrockner getrennt, so daß mit Hilfe eines Druckmessers eine Messung des Luftdrucks in jeder einzelnen Luftfeder möglich ist, ohne daß dabei ein Luftvolumen von der Luftfeder in den Lufttrockner strömt und es zu unerwünschten Druckverlusten in der Luftfeder kommt.

Ein weiterer Vorteil der Erfindung ist darin zu sehen, daß während des Entleerens einer Luftfeder das zweite steuerbare Wegeventil nicht ständig durchströmt wird. Daher kommt es an diesem Ventil nicht zu strömungsbedingten Luftdruckverlusten. Infolgedessen liegt an dem Steuereingang des pneumatisch steuerbaren ersten Wegeventils der volle statische Luftdruck der Luftfeder an, so daß dort hohe Schaltkräfte erzeugt werden können (im Gegensatz dazu wird bei der aus der DE 35 42 975 C2 bekannten Niveauregeleinrichtung während des Entleerens einer Luftfeder das zweite steuerbare Wegeventil ständig durchströmt, da über dieses Wegeventil einerseits der Steuereingang des pneumatisch steuerbaren ersten Wegeventils angesteuert wird und andererseits die Luft aus der Luftfeder in den Luftrockner strömt; aus diesem Grunde kommt es ständig zu Druckverlusten im statischen Luftdruck, so daß an dem Steuereingang des pneumatisch steuerbaren, ersten Wegeventils nicht der volle Luftdruck der Luftfeder anliegt).

Gemäß einer Weiterbildung der Erfindung nach Anspruch 2 ist der pneumatische Steuereingang des ersten Wegeventils zum Beendigen eines Entleerungsvorganges über das zweite steuerbare Wegeventil mit der Atmosphäre verbindbar. Der Vorteil dieser Weiterbildung ist darin zu sehen, daß zur Entlüftung des Steuereinganges des ersten Wegeventils zur Atmosphäre kein separates Ventil bereitgestellt zu werden braucht. Vielmehr ist diese Funktion in das zweite steuerbare Wegeventil integriert.

Gemäß einer Weiterbildung der Erfindung nach Anspruch 3 ist der pneumatische Steuereingang des dritten Wegeventils zum Entleeren der Luftfeder über das zweite steuerbare Wegeventil mit dem Druck in der Luftfeder beaufschlagt. Der Vorteil dieser Weiterbildung ist darin zu sehen, daß kein separates Wegeventil bereitgestellt zu werden braucht, über das der pneumatische Steuereingang des dritten Wegeventils während des Entleerens der Luftfeder mit dem Druck in der Luftfeder beaufschlagt wird.

Gemäß einer Weiterbildung der Erfindung nach Anspruch 4 ist der pneumatische Steuereingang des pneumatisch steuerbaren dritten Wegeventils nach einem Entleerungsvorgang mit der Atmosphäre verbindbar. Der Vorteil dieser Weiterbildung ist darin zu sehen, daß durch die Verbindung des Steuereingangs mit der Atmosphäre das pneumatisch steuerbare dritte Wegeventil auf besonders einfache Art und Weise wieder in den Schaltzustand überführbar ist, in dem es die Luftfeder zum Lufttrockner hin sperrt (d. h. in den Grundzustand).

Gemäß einer Weiterbildung der Erfindung nach Anspruch 5 ist der pneumatische Steuereingang des pneumatischen steuerbaren dritten Wegeventils über das zweite steuerbare Wegeventil mit der Atmosphäre verbindbar. Der Vorteil dieser Weiterbildung ist darin zu sehen, daß die pneumatischen Steuereingänge des ersten und dritten Wegeventils über das gleiche Wegeventil mit der Atmosphäre verbindbar sind und somit wenige Wegeventile benötigt werden, wodurch Kosten eingespart werden.

Gemäß einer Weiterbildung der Erfindung nach Anspruch 6 sind das pneumatisch steuerbare erste Wegeventil und das pneumatisch steuerbare dritte Wegeventil in einem pneumatisch steuerbaren Wegeventil zusammengefaßt. Der Vorteil dieser Weiterbildung ist darin zu sehen, daß nicht zwei separate pneumatisch steuerbare Wegeventile bereitgestellt zu werden brauchen und somit Kosten eingespart werden können.

Gemäß einer Weiterbildung der Erfindung nach Anspruch 7 ist das zweite steuerbare Wegeventil elektrisch steuerbar. Der Vorteil dieser Weiterbildung ist darin zu sehen, daß die Niveauregeleinrichtung in einen anderen Schaltzustand, in dem ein Entleeren der Luftfedern möglich ist, überführbar ist.

Ein Ausführungsbeispiel und weitere Vorteile der Erfindung werden im Zusammenhang mit den nachstehenden Figuren erläutert, darin zeigt:
- Fig. 1: eine Niveauregeleinrichtung in schematischer Darstellung,
- Fig. 2: eine Niveauregeleinrichtung in schematischer Darstellung.

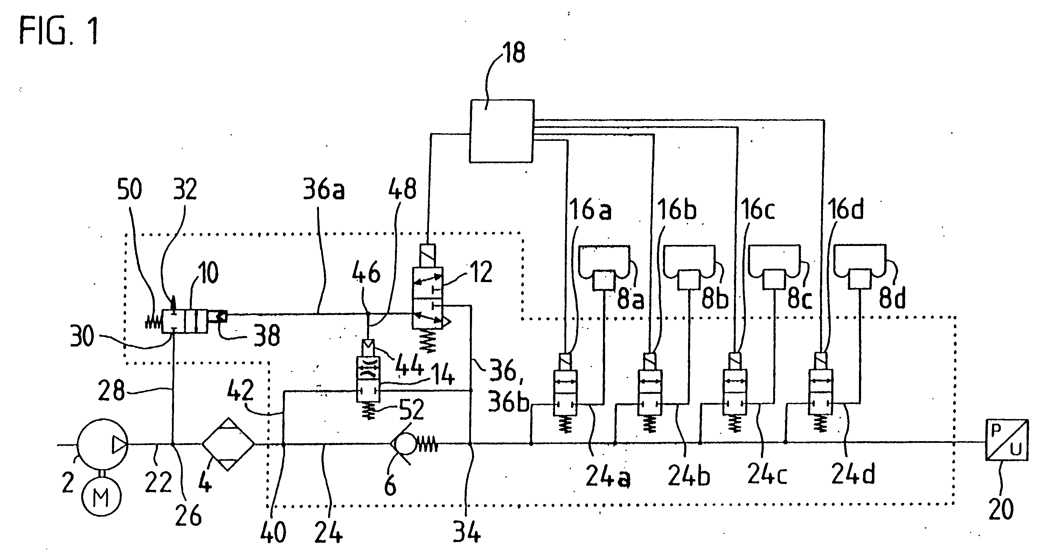

Figur 1 zeigt eine Niveauregeleinrichtung in schematischer Darstellung, wobei nur die für die nachfolgenden Erläuterungen notwendigen Bestandteile gezeigt sind. Die Niveauregeleinrichtung verfügt über eine Druckluftquelle in Form eines Kompressors 2, der über eine Druckleitung 22 mit dem Eingang eines Lufttrockners 4 verbunden ist. Ausgangsseitig ist der Lufttrockner 4 über eine Druckleitung 24 mit den Luftfedern 8a bis 8d verbunden. In der Druckleitung 24 liegt ein zu den Luftfedern 8a bis 8d öffnendes Rückschlagventil 6. Hinter dem Rückschlagventil 6 (vom Lufttrockner 4 aus gesehen) zweigen von der Druckleitung 24 die Druckleitungen 24a bis 24d ab, von denen jeweils eine zu den Luftfedern 8a bis 8d führt. Jede der Druckleitungen 24a bis 24d enthält ein elektrisch steuerbares 2/2-Wegeventil 16a bis 16d, mit dem die Druckleitungen 24a bis 24d gesperrt bzw. durchgeschaltet werden können. Die Druckleitung 24 steht hinter dem Rückschlagventil 6 (von dem Lufttrockner 4 aus gesehen) zusätzlich mit einem Drucksensor 20 in Verbindung, dessen Funktion später erläutert wird.

Zwischen dem Kompressor 2 und dem Lufttrockner 4 zweigt im Verzweigungspunkt 26 eine Druckleitung 28 ab, die auf den ersten Anschluß 30 des pneumatisch steuerbaren 2/2-Wegeventils 10 geführt wird. Der zweite Anschluß 32 des pneumatisch steuerbaren Wegeventils 10 ist mit der Atmosphäre verbunden. In einem ersten Schaltzustand des pneumatisch steuerbaren Wegeventils 10 ist die Druckleitung 28 zur Atmosphäre in gesperrt, wohingegen im zweiten Schaltzustand des pneumatisch steuerbaren Wegeventils 10 die Druckleitung 28 mit der Atmosphäre verbunden ist. Die Bedeutung der einzelnen Schaltzustände wird weiter unten näher erläutert.

Zwischen dem Rückschlagventil 6 und den Luftfedern 8a bis 8d zweigt in einem Verzweigungspunkt 34 die Druckleitung 36 von der Druckleitung 24 ab. In der Druckleitung 36 liegt das elektrisch steuerbare 3/2-Wegeventil 12, über das die Druckleitung 36 mit dem pneumatischen Steuereingang 38 des pneumatisch steuerbaren ersten Wegeventils 10 verbunden ist. Im ersten Schaltzustand des elektrisch steuerbaren Wegeventils 12 ist der Teil 36a der Druckleitung 36, der von dem Wegeventil 12 auf den pneumatischen Steuereingang 38 führt, mit der Atmosphäre verbunden und der zweite Teil 36b der Druckleitung 36, der von der Druckleitung 24 auf das Wegeventil 12 führt, zur Atmosphäre hin gesperrt. Im zweiten Schaltzustand des Wegeventils 12 ist die Druckleitung 36 durchgeschaltet, so daß die Druckleitung 24 ausgehend vom Verzweigungspunkt 34 mit dem pneumatischen Steuereingang 38 des pneumatisch steuerbaren Wegeventils 10 verbunden ist. Die Funktion der Schaltzustände wird ebenfalls weiter unter erläutert.

Zwischen dem Lufttrockner 4 und dem Rückschlagventil 6 zweigt in einem Verzweigungspunkt 40 eine Druckleitung 42 von der Druckleitung 24 ab. Die Druckleitung 42 wird zwischen dem Rückschlagventil 6 und den Luftfedern 8a bis 8d wieder auf die Druckleitung 24 geführt. Dies erfolgt vorzugsweise dadurch, daß die Druckleitung 42 auf den Teil 36b der Druckleitung 36 geführt wird, der die Druckleitung 24 ausgehend vom Verzweigungspunkt 34 mit dem Wegeventil 12 verbindet.

In der Druckleitung 42 befindet sich ein pneumatisch steuerbares 2/2-Wegeventil 14, das in einem ersten Schaltzustand die Druckleitung 42 unterbricht und in einem zweiten Schaltzustand die Druckleitung 42 durchschaltet. Der pneumatische Steuereingang 44 wird zum Umschalten des Wegeventils 14 mit dem Luftdruck in der Luftfeder 8a - 8d beaufschlagt, was an sich in beliebiger Art und Weise erfolgen kann. Bevorzugt wird der Luftdruck in einer der Luftfedern 8a bis 8d jedoch über das Wegeventil 16a bis 16 d und das Wegeventil 12 an den Steuereingang 44 angelegt. Dazu zweigt von dem Teil 36a der Druckleitung 36 in dem Verzweigungspunkt 46 eine Druckleitung 48 ab, die auf den pneumatischen Steuereingang 44 führt. Die Funktion der Schaltzustände wird ebenfalls weiter unten erläutert.

Figur 1 zeigt die Niveauregeleinrichtung im Grundzustand, in der weder ein Befüllen noch ein Entleeren der Luftfedem 8a bis 8d möglich ist und die Luftfedem 8a bis 8d zum Lufttrockner 4 hin gesperrt sind. Im folgenden wird erläutert, wie beispielsweise die Luftfeder 8a mit Luft befüllt werden kann: Zunächst wird von der Steuereinrichtung 18 ein Signal auf den Steuereingang des elektrisch steuerbaren Wegeventils 16a gegeben, so daß dieses von dem in der Figur 1 gezeigten Grundzustand (erster Schaltzustand) in den zweiten Schaltzustand übergeht. Die Druckleitung 24a ist dann durchgeschaltet. Daraufhin wird von der Steuereinrichtung 18 der Kompressor 2 angesteuert, so daß dieser über den Lufttrockner 4, das Rückschlagventil 6 und das Wegeventil 16a Luft in die Luftfeder 8a fördert. Soll der Auffüllvorgang der Luftfeder 8a beendet werden, so wird von der Steuereinrichtung 18 das Wegeventil 16a stromlos geschaltet, so daß dieses wieder von dem zweiten Schaltzustand in den in der Figur 1 gezeigten Grundzustand übergeht. Ferner wird von der Steuereinrichtung 18 der Kompressor 2 angesteuert, so daß dieser aufhört zu laufen. Ein Befüllen der Luftfedern 8b bis 8d geschieht analog. Es sei darauf hingewiesen, daß beim Befüllen einer der Luftfedern 8a bis 8d die steuerbaren Wegeventile 10, 12 und 14 den in der Figur 1 gezeigten Grundzustand (erster Schaltzustand) beibehalten.

Im folgenden wird erläutert, wie eine der Luftfedern 8a bis 8d, beispielsweise die Luftfeder 8a, entleert wird: Zunächst wird von der Steuereinrichtung 18 ein Signal auf den Steuereingang des Wegeventils 16a und auf den Steuereingang des Wegeventils 12 gegeben, so daß diese von dem in der Figur 1 gezeigten Grundzustand (erster Schaltzustand) in den zweiten Schaltzustand übergehen. Die Druckleitungen 24a und 36 sind dann "durchgeschaltet". Über die Druckleitungen 24a, 24 und 36 wird dann der in der Luftfeder 8a herrschende Luftdruck an den Steuereingang 38 des pneumatisch steuerbaren Wegeventils 10 angelegt. Dieses wird dann entgegen der Kraft der Rückstellfeder 50 von dem in der Figur 1 gezeigten Grundzustand (erster Schaltzustand) in den zweiten Schaltzustand überführt. Ferner wird über die Druckleitungen 24a, 24, 36 und 48 der in der Luftfeder 8a herrschende Luftdruck an den pneumatischen Steuereingang des pneumatisch steuerbaren Wegeventils 14 angelegt, so daß dieses von dem in der Figur 1 gezeigten Grundzustand (erster Schaltzustand) in den zweiten Schaltzustand übergeht. Die Luftfeder 8a wird dann über das Wegeventil 16a, das Wegeventil 14, den Lufttrockner 4 und das Wegeventil 10 in die Atmosphäre entleert.

Soll der Entleerungsvorgang beendet werden, so werden durch die Steuereinrichtung 18 die Wegeventile 16a und 12 stromlos geschaltet, so daß diese von dem zweiten Schaltzustand wieder in den in der Figur 1 gezeigten Grundzustand übergehen. In diesem Fall wird der Teil 36a der Steuerleitung 36 über das Wegeventil 12 zur Atmosphäre hin entleert, so daß an dem pneumatischen Steuereingang 38 des Wegeventils 10 der Atmosphärendruck anliegt und das Wegeventil 10 aufgrund der Rückstellkraft der Rückstellfeder 50 von dem zweiten Schaltzustand wieder in den in der Figur 1 gezeigten Grundzustand übergeht. Ferner wird die Druckleitung 48 ebenfalls über das Wegeventil 12 mit der Atmosphäre verbunden, so daß auch an dem pneumatischen Steuereingang 44 des Wegeventils 14 der Atmosphärendruck anliegt und auch das Wegeventil 14 von dem zweiten Schaltzustand durch die Rückstellkraft der Rückstellfeder 52 in den in der Figur 1 gezeigten Grundzustand übergeht. Die Niveauregeleinrichtung befindet sich dann also insgesamt wieder in ihrem in der Figur 1 gezeigten Grundzustand. Eine Entleerung der Luftfedern 8b bis 8d findet analog statt.

Wird ein Entleerungsvorgang nicht in der oben erläuterten Art und Weise durch die Steuereinheit 18 beendet, so geht das pneumatisch steuerbare Wegeventil 10 automatisch von dem zweiten Schaltzustand in den in der Figur 1 gezeigten Grundzustand über, wenn in der Luftfeder 8a bis 8d und infolgedessen der Luftdruck am Steuereingang 38 des Wegeventils 10 auf einen bestimmten Restdruck abfällt. In diesem Fall wird nämlich das Wegeventil 10 durch die Rückstellkraft der Rückstellfeder 50 entgegen den auf den Steuereingang 38 wirkenden Restdruck von dem zweiten Schaltzustand in den Grundzustand überführt. Das pneumatisch steuerbare Wegeventil 10 übernimmt also auch die Funktion eines Restdruckhalteventils. Das pneumatisch steuerbare Wegeventil 14 geht aufgrund der Rückstellkraft der Rückstellfeder 52 ebenfalls in den in der Figur 1 gezeigten Grundzustand über.

Im folgenden wird erläutert, wie in einer der Luftfedern 8a bis 8d, beispielsweise in der Luftfeder 8a, der Luftdruck gemessen werden kann: Zur Messung des Luftdruckes in der Luftfeder 8a nehmen die Wegeventile 10, 12 und 14 den in der Figur 1 gezeigten Grundzustand ein. Das Wegeventil 16a wird durch die Steuereinrichtung 18 angesteuert, so daß es von dem in der Figur 1 gezeigten Grundzustand in den zweiten Schaltzustand übergeht. Die Druckleitung 24a ist dann durchgeschaltet, so daß der Luftdruck in der Luftfeder 8a über die Druckleitung 24a und 24 an dem Druckmesser 20 anliegt und von diesem gemessen werden kann. Bei der Messung des Luftdruckes in der Luftfeder 8a gelangt keine Luft in den Lufttrockner 4, da sowohl das Rückschlagventil 6 als auch das Wegeventil 14 zum Lufttrockner 4 hin sperrt. Aus diesem Grunde kommt es bei einer Messung des Luftdruckes der Feder 8a nicht zu einem unerwünschten Verlust von Luftvolumen in der Luftfeder 8a durch Abfließen von Luft in den Lufttrockner 4. Der Luftdruck der Luftfedern 8b bis 8d wird analog gemessen.

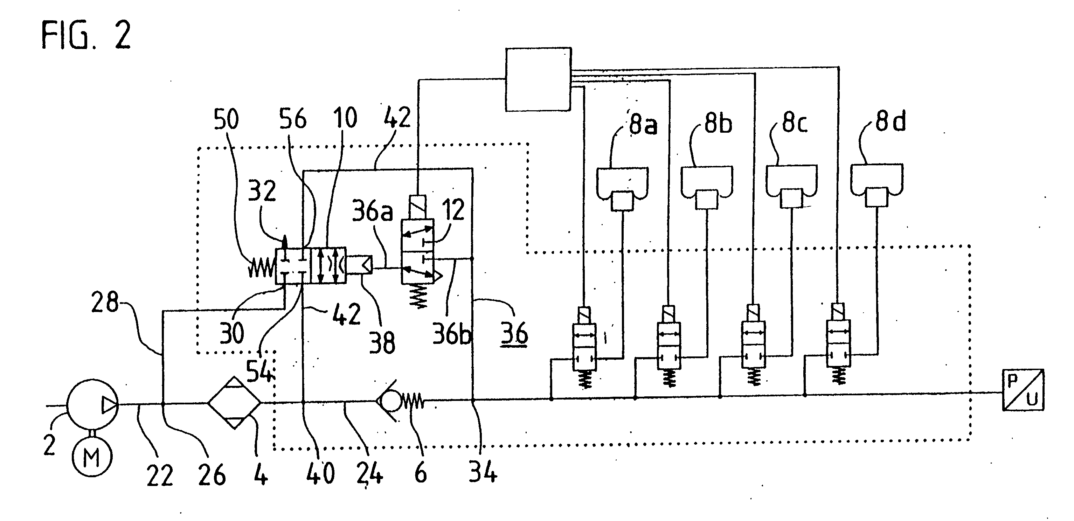

Figur 2 zeigt eine Niveauregeleinrichtung, die weitgehend genauso aufgebaut ist wie die in der Figur 1 gezeigt Niveauregeleinrichtung. Ein Unterschied ist lediglich darin zu sehen, daß die in der Figur 1 gezeigten pneumatisch steuerbaren 2/2 Wegeventile 10 und 14 in einem pneumatisch steuerbaren 4/2-Wegeventil 10 zusammengefaßt sind. Auf den ersten Anschluß 30 des 4/2-Wegeventils 10 wird die Druckleitung 28 geführt, die über den zweiten Anschluß 32 mit der Atmosphäre verbindbar ist. Auf den dritten Anschluß 54 des Wegeventils 10 wird der Teil der Druckleitung 42 geführt, der vom Verzweigungspunkt 40 abzweigt, und auf den vierten Anschluß 56 des Wegeventils 10 wird der Teil der Druckleitung 42 geführt, der im Verzweigungspunkt 34 zwischen dem Rückschlagventil 6 und den Luftfedern 8a bis 8d endet.

Die Anschlüsse 54 und 56 des Wegeventils 10 in der Figur 2 entsprechen somit den Anschlüssen des Wegeventils 14 in der Figur 1. Auf den pneumatischen Steuereingang 38 des Wegeventils 10 führt, genau wie in der Figur 1, der Teil der Druckleitung 36a, der das Wegeventil 12 mit dem Wegeventil 10 verbindet. Im in der Figur 2 gezeigten Grundzustand (erster Schaltzustand) des 4/2-Wegeventils 10 ist die Druckleitung 28 zur Atmosphäre hin gesperrt und die Druckleitung 42 unterbrochen (genauso wie in Figur 1 gezeigtem Grundzustand). Im zweiten Schaltzustand des 4/2-Wegeventils ist die Druckleitung 28 mit der Atmosphäre verbunden und die Druckleitung 42 durchgeschaltet. Im übrigen ist die Funktionalität der in der Figur 2 gezeigten Niveauregeleinrichtung identisch mit der in der Figur 1 gezeigten Niveauregeleinrichtung, so daß diesbezüglich auf die Figurenbeschreibung zu der Figur 1 verwiesen wird.

## Patentansprüche

1. Niveauregeleinrichtung für Fahrzeuge mit Luftfedern (8a bis 8d), durch die ein Fahrzeugaufbau gegenüber mindestens einer Fahrzeugachse abgefedert ist, die folgende Merkmale aufweist:
- eine Druckluftquelle (2), die zum Auffüllen der Luftfeder (8a bis 8d) über einen Lufttrockner (4) mit der Luftfeder (8a bis 8d) verbindbar ist
- der Lufttrockner (4) ist zum Auffüllen der Luftfeder (8a bis 8d) einerseits über ein zur Luftfeder (8a bis 8d) öffnendes Rückschlagventil (6) mit der Luftfeder (8a bis 8d) verbunden
- jede Luftfeder (8a bis 8d) ist zum Entleeren über den Lufttrockner (4) und über ein pneumatisch steuerbares erstes Wegeventil (10) mit der Atmosphäre verbindbar, wobei der pneumatische Steuereingang (38) dieses Wegeventils (10) dann über ein zweites steuerbares Wegeventil (12) mit dem Druck in der Luftfeder (8a bis 8d) gegen eine auf dem pneumatischen Steuereingang (38) wirkende Rückstellkraft (50) beaufschlagt ist,
- der pneumatische Steuereingang (38) des pneumatisch steuerbaren ersten Wegeventils (10) ist zum Beendigen eines Entleerungsvorganges mit der Atmosphäre verbindbar
**dadurch gekennzeichnet, daß**
- der Lufttrockner (4) zum Entleeren der Luftfeder (8a bis 8d) andererseits über ein pneumatisch steuerbares drittes Wegeventil (14) mit der Luftfeder (8a bis 8d) verbunden ist, wobei der pneumatische Steuereingang (44) dieses Wegeventils dann mit dem Druck in der Luftfeder (8a bis 8d) gegen eine auf den pneumatischen Steuereingang (44) wirkende Rückstellkraft (52) beaufschlagt ist.

2. Niveauregeleinrichtung nach Anspruch 1, **dadurch gekennzeichnet, daß** der pneumatische Steuereingang (38) des ersten Wegeventils (10) zum Beendigen eines Entleerungsvorganges über das zweite steuerbare Wegeventil (12) mit der Atmosphäre verbindbar ist.

3. Niveauregeleinrichtung nach einem der Ansprüche 1 bis 2, **dadurch gekennzeichnet, daß** der pneumatische Steuereingang (44) des dritten Wegeventils (14) zum Entleeren der Luftfeder (8a bis 8d) über das zweite steuerbare Wegeventil (12) mit dem Druck in der Luftfeder (8a bis 8d) beaufschlagt ist.

4. Niveauregeleinrichtung nach einem der Ansprüche 1 bis 3, **dadurch gekennzeichnet, daß** der pneumatische Steuereingang (44) des pneumatisch steuerbaren dritten Wegeventils (14) mit der Atmosphäre verbindbar ist.

5. Niveauregeleinrichtung nach einem der Ansprüche 1 bis 4, **dadurch gekennzeichnet, daß** der pneumatische Steuereingang (44) des pneumatisch steuerbaren dritten Wegeventils über das zweite steuerbare Wegeventil (12) mit der Atmosphäre verbindbar ist.

6. Niveauregeleinrichtung nach einem der Ansprüche 1 bis 5, **dadurch gekennzeichnet, daß** das pneumatisch steuerbare erste Wegeventil (10) und das pneumatisch steuerbare dritte Wegeventil (14) in einem pneumatisch steuerbaren Wegeventil (10) zusammengefaßt sind.

7. Niveauregeleinrichtung nach einem der Ansprüche 1 bis 6, **dadurch gekennzeichnet, daß** das zweite steuerbare Wegeventil (12) elektrisch steuerbar ist.

## Claims

1. Level regulating arrangement for vehicles provided with pneumatic springs (8a to 8d), by means of which arrangement a vehicle structure is spring-mounted relative to at least one vehicle axle, said arrangement having the following features:
- a source of compressed air (2) which, to fill the pneumatic spring (8a to 8d), is connectable to the pneumatic spring (8a to 8d) via an air dryer (4),
- the air dryer (4) is connected, at one end, to the pneumatic spring (8a to 8d) via a non-return valve (6), which opens towards the pneumatic spring (8a to 8d), to fill the pneumatic spring (8a to 8d),
- each pneumatic spring (8a to 8d) is connectable to the atmosphere via the air dryer (4) and via a pneumatically controllable first directional valve (10) for emptying purposes, the pneumatic control inlet (38) of this directional valve (10) then being acted upon by the pressure in the pneumatic spring (8a to 8d) via a second controllable directional valve (12) in opposition to a restoring force (50), which acts on the pneumatic control inlet (38), and
- the pneumatic control inlet (38) of the pneumatically controllable first directional valve (10) is connectable to the atmosphere to terminate an emptying process,
**characterised in that**
- the air dryer (4) is connected, at the other end, to the pneumatic spring (8a to 8d) via a pneumatically controllable third directional valve (14) for emptying the pneumatic spring (8a to 8d), the pneumatic control inlet (44) of this directional valve then being acted upon by the pressure in the pneumatic spring (8a to 8d) in opposition to a restoring force (52) acting on the pneumatic control inlet (44).

2. Level regulating arrangement according to claim 1, **characterised in that** the pneumatic control inlet (38) of the first directional valve (10) is connectable to the atmosphere via the second controllable directional valve (12) in order to terminate an emptying process.

3. Level regulating arrangement according to one of claims 1 to 2, **characterised in that** the pneumatic control inlet (44) of the third directional valve (14) is acted upon by the pressure in the pneumatic spring (8a to 8d) via the second controllable directional valve (12) in order to empty the pneumatic spring (8a to 8d).

4. Level regulating arrangement according to one of claims 1 to 3, **characterised in that** the pneumatic control inlet (44) of the pneumatically controllable third directional valve (14) is connectable to the atmosphere.

5. Level regulating arrangement according to one of claims 1 to 4, **characterised in that** the pneumatic control inlet (44) of the pneumatically controllable third directional valve is connectable to the atmosphere via the second controllable directional valve (12).

6. Level regulating arrangement according to one of claims 1 to 5, **characterised in that** the pneumatically controllable first directional valve (10) and the pneumatically controllable third directional valve (14) are combined in a pneumatically controllable directional valve (10).

7. Level regulating arrangement according to one of claims 1 to 6, **characterised in that** the second controllable directional valve (12) is electrically controllable.

## Revendications

1. Dispositif de réglage du niveau pour véhicules automobiles comportant des ressorts pneumatiques (8a à 8d), au moyen desquels le châssis d'un véhicule est suspendu par rapport à au moins un essieu du véhicule, et qui présente les caractéristiques suivantes :
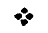 une source d'air comprimé (2), qui, pour le remplissage du ressort pneumatique (8a à 8d), peut être raccordé au ressort pneumatique (8a à 8d) par l'intermédiaire d'un dispositif de séchage d'air (4),
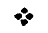 le dispositif de séchage d'air (4) est raccordé, pour le remplissage du ressort pneumatique (8a à 8d), le dispositif de séchage d'air (4) est raccordé au ressort pneumatique (8a à 8d) par l'intermédiaire d'une part d'une soupape antiretour (6) qui s'ouvre vers le ressort pneumatique (8a à 8d),
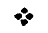 chaque ressort pneumatique (8a à 8d) peut être raccordé à l'atmosphère par l'intermédiaire du dispositif de séchage d'air (4) d'un premier distributeur (10) pouvant être commandé pneumatiquement, l'entrée de commande pneumatique (36) de ce distributeur (10) étant chargée par l'intermédiaire d'un second distributeur commandable (12) à la pression régnant dans le ressort pneumatique (8a à 8d), à l'encontre d'une force de rappel (50) agissant sur Centrée de commande pneumatique (38),
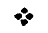 l'entrée de commande pneumatique (38) du premier distributeur (10) commandable pneumatique peut être raccordée à l'atmosphère pour achever un processus de vidage,
**caractérisé en ce que** pour le vidage du ressort pneumatique (8a à 8d), le dispositif de séchage pneumatique (4) est raccordé d'autre part par l'intermédiaire d'un troisième distributeur (14) commandable pneumatiquement, au ressort pneumatique (8a à 8d), l'entrée de commande pneumadque (43) de ce distributeur étant chargée alors par la pression régnant dans le ressort pneumatique (8a à 8d), à l'encontre d'une force de rappel (52) agissant à l'entrée de commande pneumatique (44).

2. Dispositif de réglage de niveau selon la revendication 1, **caractérisé en ce que** pour terminer le processus de vidage, l'entrée de commande pneumatique (38) du premier distributeur (10) peut être raccordée à l'atmosphère par l'intermédiaire du second distributeur commandable (12).

3. Dispositif de réglage de niveau selon l'une des revendications 1 et 2, **caractérisé en ce que** pour le vidage du ressort pneumatique (8a à 8d), l'entrée de commande pneumadque (44) du troisième distributeur (14) est chargée par la pression régnant dans le ressort pneumadque (8a à 8d), par l'intermédiaire du second distributeur commandable (12).

4. Dispositif de réglage de niveau selon l'une des revendications 1 à 3, **caractérisé en ce que** l'entrée de commande pneumatique (44) du troisième distributeur (14) commandable pneumatiquement peut être raccordée à l'atmosphère.

5. Dispositif de réglage de niveau selon l'une des revendications 1 à 4, **caractérisé en ce que** l'entrée de commande pneumatique (44) du troisième distributeur commandable pneumatiquement peut être raccordée à l'atmosphère par l'intermédiaire du deuxième distributeur commandable (12).

6. Dispositif de réglage de niveau selon l'une des revendications 1 à 5, **caractérisé en ce que** le premier distributeur (10) commandable pneumatiquement et le troisième distributeur (14) commandable pneumatiquement sont rassemblés dans un distributeur (10) commandable pneumatiquement.

7. Dispositif de réglage de niveau selon l'une des revendications 1 à 6, **caractérisé en ce que** le second distributeur commandable (12) est commandable électriquement.
